(19) Europäisches Patentamt
European Patent Office
Office européen des brevets

(11) **EP 2 782 085 A1**

(12) **EUROPEAN PATENT APPLICATION**
published in accordance with Art. 153(4) EPC

(43) Date of publication:
**24.09.2014 Bulletin 2014/39**

(51) Int Cl.:
***G08G 1/16*** *(2006.01)*    ***B60R 21/00*** *(2006.01)*

(21) Application number: **12849641.1**

(22) Date of filing: **05.10.2012**

(86) International application number:
**PCT/JP2012/075886**

(87) International publication number:
**WO 2013/073310 (23.05.2013 Gazette 2013/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.11.2011   JP 2011249816**

(71) Applicant: **Hitachi, Ltd.**
**Tokyo 100-8280 (JP)**

(72) Inventors:
• **TAKEMURA Masayuki**
**Chiyoda-ku,**
**Tokyo 100-8280 (JP)**

• **MURAMATSU Shoji**
**Saitama-shi**
**Saitama 330-0081 (JP)**
• **SHIMA Takeshi**
**Chiyoda-ku,**
**Tokyo 100-8280 (JP)**
• **SAKATA Masao**
**Saitama-shi**
**Saitama 330-0081 (JP)**

(74) Representative: **MERH-IP**
**Matias Erny Reichl Hoffmann**
**Paul-Heyse-Strasse 29**
**80336 München (DE)**

(54) **ONBOARD ENVIRONMENT-RECOGNITION DEVICE**

(57)    Disclosed is an onboard environment-recognition device 100, capable of finding a recognition result with high precision in a state where alarm and vehicle-control are ready for actuation, and realizing recognition of the ambient environment of a vehicle with higher accuracy, that is, for recognizing the ambient environment of the driver's own vehicle on the basis of an image taken by an imaging unit 110. The onboard environment-recognition device includes respective detection units 211 through 213 for detecting plural preset detection elements from the image, and a process-load adjust unit 320 for adjusting detection accuracy of at least one of the plural detection elements according to the state of the driver' s own vehicle. Thereby, correction of control timing according to the state of the vehicle by an alarm and vehicle-control unit 400, enhancement in stability, and higher precision of estimated accuracy and calculation accuracy are achieved.

**FIG.1**

## Description

Technical Field

The invention relates to an onboard environment-recognition device for recognizing an ambient environment of a driver's own vehicle on the basis of an image taken by an imaging unit, and an alarm and vehicle-control system using the same.

Background Art

A progress has since been made in the development of a camera for use in recognition of an ambient environment of a vehicle such as an automobile. Recently, the development of an ambient environment device for executing multiple applications using multiple cameras has also been advancing.

In Patent Document 1, an application to be executed is dynamically selected from among multiapplications, according to a vehicle operation state, in a multiprocessor system, and the application as selected is dynamically allocated to a plurality of processors, thereby realizing effective utilization of the processors.

Citation List

Patent Literature

Patent Document 1: WO 2008/062512

Summary of Invention

Technical Problem

However, the output-performance of the application has limitations under a limited CPU performance. Even if the application can be changed over according to the ambient environment of a vehicle to thereby enable change-over of the application to be effected according to circumstances, it is difficult to enhance the performance of a single application.

The present invention has been developed in view of the circumstances described as above, and it is therefore an object of the invention to obtain an onboard environment-recognition device capable of finding a recognition result with high precision in a state where alarm and vehicle-control are ready for actuation, and realizing recognition of the ambient environment of a vehicle with higher accuracy.

Solution to Problem

In order to solve the problem described as above, an onboard environment-recognition device according to the invention is provided with a detection unit for detecting plural preset detection elements from an image taken by a imaging unit, and an adjust unit for adjusting detection accuracy of at least one of the plural detection elements according to a state of a driver's own vehicle.

Advantageous Effects of Invention

With the onboard environment-recognition device according to the invention, it is possible to find a recognition-result with high accuracy in a state where the alarm and vehicle-control are ready for actuation, thereby enabling the recognition of the ambient environment of the vehicle to be realized with higher precision. Accordingly, correction of timing for the alarm and vehicle-control, according to the state of the vehicle, enhancement in stability, and higher estimation accuracy as well as calculation accuracy can be achieved. Further, problems, configurations, and effects, other than those described as above, will be apparent from the following description of the preferred embodiments of the invention.

Brief Description of Drawings

Fig. 1 is a block diagram of an onboard environment-recognition device according to a first embodiment of the invention;

Fig. 2 is a block diagram of a vehicle behavior unit;

Fig. 3 is a block diagram of an alarm and vehicle-control unit;

Fig. 4 is a block diagram of an app-control unit;

Fig. 5 is a table showing respective ratios of the involvement degrees as well as process-loads, with respect to plural detection processes, at respective scenes,

Fig. 6 is view showing respective ratios of the process-loads in each of the plural detection processes at the respective scenes;

Fig. 7 is a process flow chart;

Fig. 8 is a view showing an example of outputs of the alarm and vehicle-control, for a sudden lane-deviation;

Fig. 9 is a view showing an example of outputs of a lane-maintenance control along a curve;

Fig. 10 is a block diagram of an onboard environment-recognition device according to a second embodiment of the invention;

Fig. 11 is a table showing respective involvement degrees of plural processes, and the ratios of respective process-loads, at the respective scenes;

Fig. 12 is a view showing the ratios of the process-loads with respect to the plural processes;

Fig. 13 is a view showing an example of outputs of an alarm and vehicle-control at a low-speed lateral-velocity left lane-deviation time; and

Fig. 14 is a view showing an example of outputs of an alarm and vehicle-control at a high-speed lateral-velocity left lane-deviation time.

Description of Embodiments

[First Embodiment]

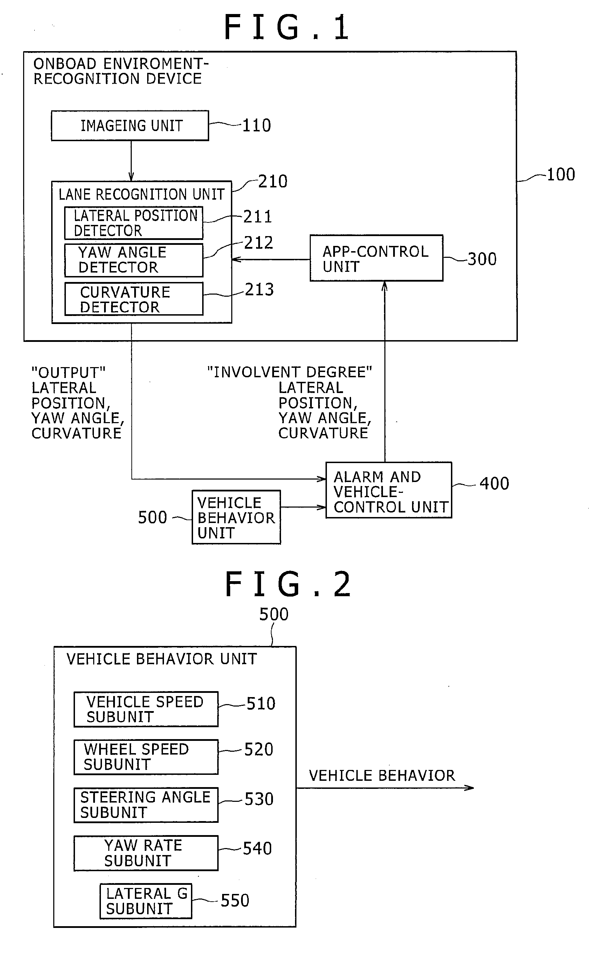

Fig. 1 is a block diagram of an onboard environment-recognition device 100 according to a present embodiment of the invention. The onboard environment-recognition device 100 is installed in a microcomputer provided in, for example, a camera device mounted in a vehicle, the onboard environment-recognition device 100 being embodied by execution of a software program in a ROM, by use of a CPU.

The onboard environment-recognition device 100 is provided with a lane-recognition application for recognizing a lane (traveling lane) where an driver's own vehicle is traveling, thereby detecting a plurality of detection-elements by a lane-recognition unit 210 making use of an image taken by an imaging unit 110, more specifically, detecting a lateral-position of a white line partitioning off a lane as well as the driver's own vehicle, a yaw angle, the curvature of a curve, indicating a manner in which the curve is bent.

The lane-recognition unit 210 is provided with a lateral-position detection unit 211, a yaw-angle detection unit 212, and a curvature detection unit 213, and the respective detection units 211 through 213 have a configuration capable of variably adjusting detection accuracy independently from other detection units. Further, an application is hereinafter referred to simply as "an app".

A lateral-position detection process A for detecting the lateral-position of the white line, on the basis of the image taken by the imaging unit 110, is executed by the lateral-position detection unit 211. The lateral-position detection unit 211 can enhance the detection accuracy of the lateral-position by enhancing resolution for finding the lateral-position of the white line. However, because this will entail a rise in a process-load as well, it is necessary to decide a CPU process-load to be allocated to the respective detection units, while grasping process-time as a whole for app-control, thereby adjusting the detection accuracy.

The yaw-angle detection unit 212 executes a yaw-angle detection process B for detecting the yaw angle of the driver's own vehicle on the basis of the image taken by the imaging unit 110. The yaw-angle detection unit 212 can similarly enhance the detection accuracy of the yaw angle by enhancing resolution for tilt of the white line as with the case of the lateral-position. However, in this case as well, the further the resolution is enhanced, the more process time will rise similarly as with the case of the lateral-position detection unit 211.

The curvature detection unit 213 executes a curvature-detection process C for detecting the curvature of a curve along which the driver's own vehicle travels, on the basis of the image taken by the imaging unit 110. With the curvature detection unit 213, there is available a method for enhancing the detection accuracy of the curvature by making use of an image in higher resolution. Otherwise, there is also available a method whereby the detection accuracy is lowered on the assumption that a road curvature will not undergo a abrupt change, and a process cycle is changed such that one curvature-detection is executed for every two lane-recognitions to thereby allocate part of the CPU process-load to other processes. Still further, there are available a technique for increasing the number of times that a curvature-estimation program is repeatedly calculated, a technique for increasing the number of input points utilized for curvature-estimation etc., these technique each exerting an influence on respective process-time as well as detection accuracy.

The lane-recognition unit 210 outputs information on the lateral-position, the yaw angle, and the curvature, as the detection-elements detected by the respective detection units 211 through 213, to an alarm and vehicle-control unit 400. And a vehicle behavior unit 500 outputs information on a vehicle speed, a steering angle, and a yaw rate, with respect of the driver's own vehicle, to the alarm and vehicle-control unit 400.

The alarm and vehicle-control unit 400 determines execution of alarm and vehicle-control for checking lane-deviation on the basis of the information on the lateral-position, the yaw angle, and the curvature, outputted from the lane-recognition unit 210, and the information on the vehicle speed, the steering angle, and the yaw rate, outputted from the vehicle behavior unit 500. The alarm and vehicle-control unit 400 estimates timing for execution of the alarm and vehicle-control before the actual execution of the alarm and vehicle-control.

The timing for lane-deviation can be estimated from the lateral position, the yaw angel, the vehicle speed, the steering angle.

In a stage where the timing for execution of the alarm and vehicle-control is roughly estimated, the alarm and vehicle-control unit 400 makes a request for detection accuracy necessary to stably execute the alarm and the control with high accuracy to an app-control unit 300. The app-control unit 300 alters distribution of the process-load of a detection process by the lane-recognition unit 210, or the description of the detection process, in response to request-accuracy from the alarm and vehicle-control unit 400.

However, if the request-accuracy is excessively high, and the process is not completed in a prescribed process cycle, the app-control unit 300 adjusts the description of process-execution, thereby controlling such that the process is completed within a prescribed process cycle T. Further, the request-accuracy from the alarm and vehicle-control unit 400 maybe adjusted on a lane-by-lane basis. Thus, in a front stage as predicted prior to a prescribed time for the execution of the alarm and vehicle-control, the app-control unit 300 executes the app-control such that a change occurs to output accuracy suited to the description of the alarm and vehicle-control.

Fig. 2 is a block diagram of the vehicle behavior unit.

The vehicle behavior unit 500 outputs information on the behavior of the driver's own vehicle to the alarm and vehicle-control unit 400. The information on the behavior of the driver's own vehicle is acquired from sensors attached to the vehicle.

The vehicle behavior unit 500 is provided with a vehicle speed subunit 510 for obtaining a vehicle speed of the driver's own vehicle from a vehicle speed sensor, a wheel speed subunit 520 for obtaining information from a sensor for measuring the number of wheel revolutions, a steering angle subunit 530 for obtaining information from a sensor for measuring a steering state of a vehicle handle, a yaw rate subunit 540 for obtaining information from a sensor for measuring a yaw rate indicting the degree of a change in the traveling direction of the vehicle, and a lateral G subunit 550 for obtaining information from a sensor for measuring acceleration in the lateral direction of the vehicle. The alarm and vehicle-control unit 400 consolidates the information on the behavior of the vehicle with information derived from an image-recognition result to make use of these information items at the time of determining the execution of the alarm and vehicle-control.

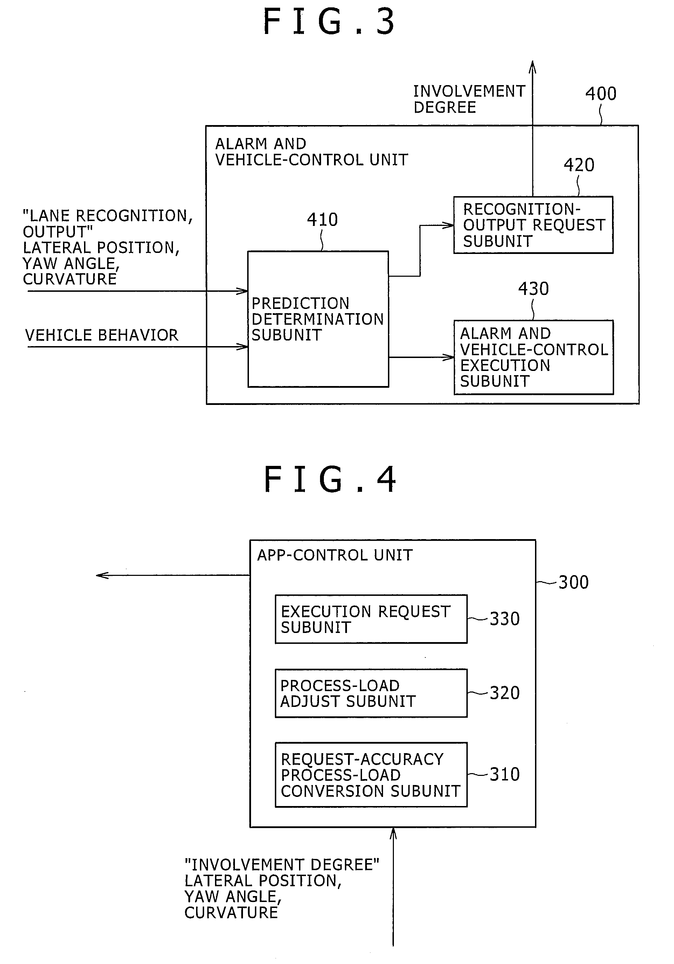

Fig. 3 is a block diagram of the alarm and vehicle-control unit. The alarm and vehicle-control unit 400 makes use of recognition results from the onboard environment-recognition device 100, that is, the information on the lateral-position, the yaw angle, and the curvature, detected by the respective detection units 211 through 213, respectively, as input-information, in the case of the present embodiment. Further, the alarm and vehicle-control unit 400 also makes use of the information on the behavior of the vehicle, obtained from the vehicle behavior unit 500, as described with reference to Fig. 2, as input information. On the basis of the input information from the onboard environment-recognition device 100, and the vehicle behavior unit 500, respectively, the alarm and vehicle-control unit 400 determines whether a vehicle control for securing the safety of the vehicle, such as lane-deviation suppression, etc., is executed, or a control for sounding an alarm in order to call attention of a driver to safety is executed.

The alarm and vehicle-control unit 400 is provided with a prediction determination subunit 410, a recognition-output request subunit 420, and an alarm and vehicle-control execution subunit 430. The prediction determination subunit 410 predicts whether or not there is the need for the alarm and vehicle-control in order to secure the safety of the driver's own vehicle before the alarm and vehicle-control is actually executed. In this case, if it is predicted that there is the need for the alarm and vehicle-control, a request value of the recognition-output request subunit 420 is altered.

The recognition-output request subunit 420 expresses whether the alarm and vehicle-control is information for use in the alarm and vehicle-control, against the onboard environment-recognition device 100 in accordance with the description of the alarm and vehicle-control, the execution of which is predicted by the prediction determination subunit 410, or what extent to which a recognition result exerts influence at the time of determining and executing the alarm and vehicle-control by use of a yardstick referred to as an involvement degree, to thereby make a request for output-accuracy of the recognition-result, according to the description of the alarm and vehicle-control to be executed. The recognition-output request subunit 420 makes a request for altering the output-result of an environment-recognition result to have more suitable accuracy to the app-control unit 300.

Further, the prediction determination subunit 410 makes a request to the recognition-output request subunit 420 to appropriately alter a value of the recognition-result before the execution of the alarm and vehicle-control, and thereafter, upon timing for the execution of the alarm and vehicle-control being reached, the alarm and vehicle-control execution subunit 430 makes use of a more appropriate recognition-output to thereby execute the alarm and vehicle-control.

Fig. 4 is a block diagram of the app-control unit.

The app-control unit 300 adjusts the detection accuracy of at least one of the plural detection-elements detected by the lane-recognition unit 210 according to the state of the driver's own vehicle (an accuracy adjust unit), and the app-control unit 300 is provided with a request-accuracy process-load conversion subunit 310, a process-load adjust subunit 320, and an execution request subunit 330.

The request-accuracy process-load conversion subunit 310 converts the process-loads of the respective detection units 211 through 213, on the basis of a request value of detection accuracy, preset for each of the plural detection-elements, according to the state of the driver's own vehicle, in the case where the execution of the alarm and vehicle-control, based on the state of the driver' s own vehicle, is predicted. More specifically, from a table of the request values of the detection accuracy, against the respective recognition-outputs, shown by use of the yardstick called the involvement degree, prepared at the alarm and vehicle-control unit 400, conversion is made of the respective process-loads in the case of executing respective processes A through C of a lane-recognition appli, and other processes Z exerting no influence on recognition-accuracy, according to the involvement degree. Herein, a process for estimating the process-loads at the time of non-adjustment of the predicted scene of the alarm and vehicle-control is executed, while referring to the involvement degree of a predicted scene of the alarm and vehicle-control, the involvement degrees at the normal time, and the process-loads at the normal time.

The process-loads converted by the request-accuracy process-load conversion subunit 310 are calculated without taking whether or not all the processes will fall within the prescribed process cycle T into consideration, and there occurs the case where the sum of the processes executed by the respective detection units 211 through 213 does not fall within the prescribed process cycle T. Further, there is also assumed the case of the process-load being small, such as the case where the sum of process time lengths of the respective processes is found less than the prescribed process cycle T depending on a calculation result, largely falling short of the prescribed process cycle T.

For this reason, the process-load adjust subunit 320 adjusts the process-loads such that a process-load conversion result falls within the prescribed process cycle T, and if there is leeway in terms of the process time, the process-load adjust subunit 320 improves overall accuracy, thereby changing to a process higher in accuracy and safety. The execution request subunit 330 issues a request for enabling more appropriate recognition-output accuracy (detection accuracy) to be realized via the description of the process-load adjust subunit 320 to the lane-recognition unit 210.

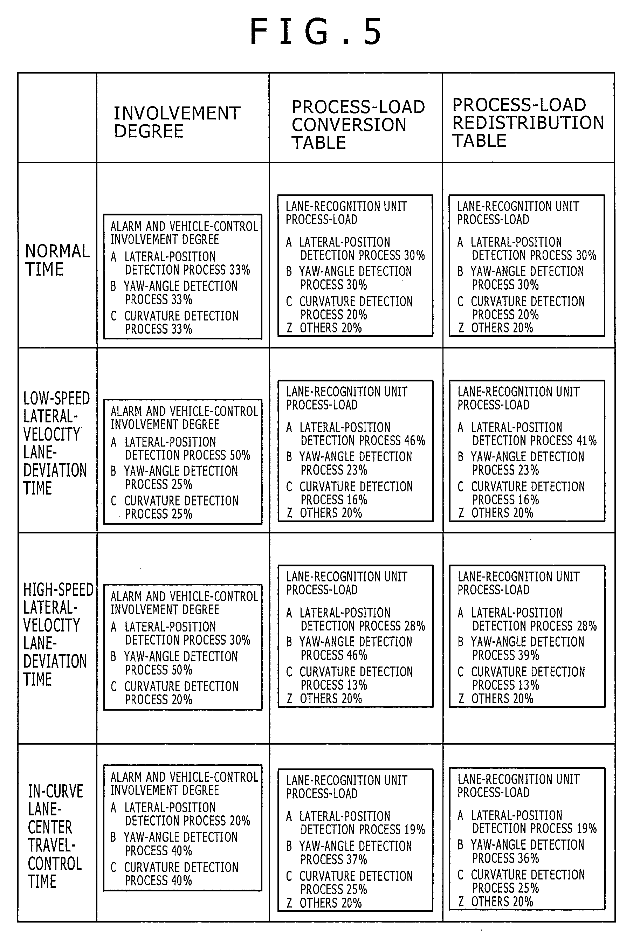

Fig. 5 is a table showing respective ratios of the involvement degrees as well as process-loads, with respect to plural processes, at respective scenes, showing distribution of the CPU process-loads, on the basis of the involvement degree of the alarm and vehicle-control.

Fig. 5 shows the involvement degrees for use in order that the alarm and vehicle-control unit 400 makes such a request as to enable a lane-recognition result to have more appropriate recognition-accuracy to the lane-recognition appli. In the table, the states (scenes) of the driver's own vehicle are shown in the longitudinal direction, indicating respective numerical values of the involvement degrees with respect to respective recognition-output results according to the respective states. The state of the driver's own vehicle indicates a change in the state of the driver's own vehicle, and in the present embodiment, there are described a normal time, a low-speed lateral-velocity lane-deviation time, and a high-speed lateral-velocity lane-deviation time.

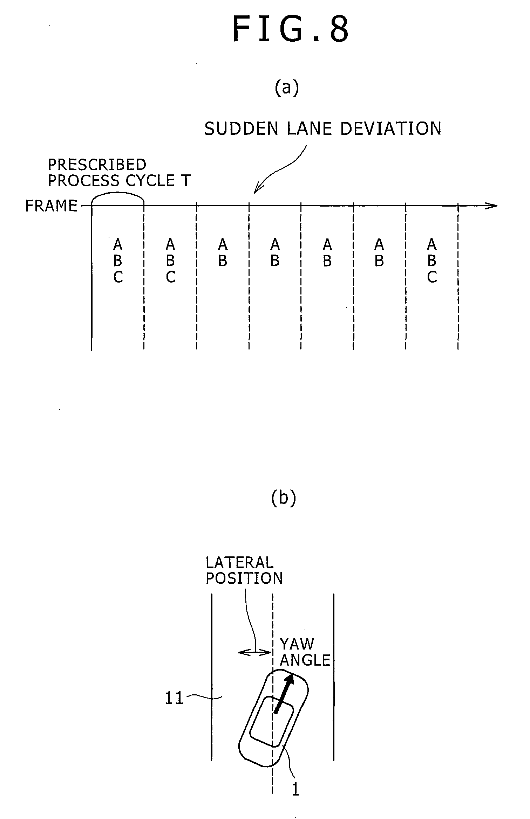

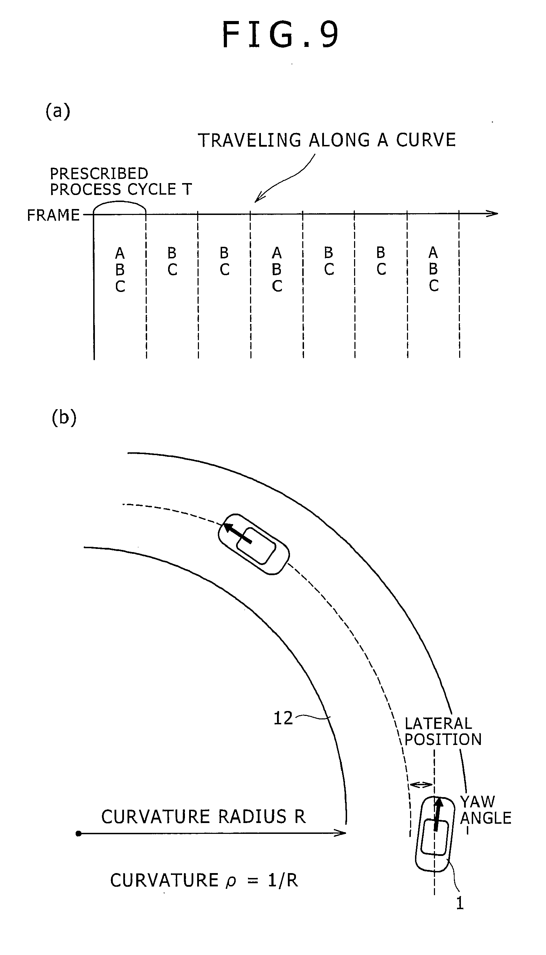

The normal time indicates a lane-recognition state where a vehicle is traveling within a lane, and the alarm and the vehicle-control, for securing safety, are regarded outside a subject matter. More specifically, this is the case where lane-deviation estimated time is equal to or more than S seconds in a state of the vehicle traveling in the vicinity of the center of the lane. However, as shown in Fig. 9, the case where the lane-deviation estimated time is similarly equal to or more than S seconds, and the vehicle is traveling on a curved road along a curve where a curvature radius R of a curved road is 800 m or less is defined as an in-curve lane-center travel-control time. The case where the lane-deviation estimated time length is less than S seconds, the inclination of the vehicle, against the lane, that is, a yaw angle is large, as shown in Fig. 8, and a velocity at which the vehicle shifts in the lateral direction, that is, a lateral velocity is not less than F [m/s] is defined as the high-speed lateral-velocity lane-deviation time. In contrast, the case of the lateral velocity being less than a threshold F [m/s] is defined as the low-speed lateral-velocity lane-deviation time.

In the case of the alarm and vehicle-control making use of the lane-recognition, what extent to which the respective detection-elements (the lateral-position, the yaw angle, the curvature) of the recognition-output are involved in the execution of the alarm and vehicle-control at scenes where the alarm and vehicle-control are ready for actuation against the low-speed lateral-velocity lane-deviation time (the alarm and vehicle-control), the high-speed lateral-velocity lane-deviation time (the alarm and vehicle-control), and the vehicle control during the vehicle traveling along a curve, respectively, are indicated by use of an index called the involvement degree.

A numerical value is preset to the involvement degree with an implication as to what extent to which use is made of respective recognition-outputs of plural recognition-processes (the lateral-position detection process A, the yaw-angle detection process B, and the curvature-detection process C) of the lane-recognition appli, and a request made for recognition-accuracy suitable for the alarm and vehicle-control due for execution with higher accuracy, and more stability.

If the numerical value of the involvement degree is high as compared with the involvement degree at the normal time, this means that the recognition-output at the relevant scene is largely involved in the execution of the alarm and vehicle-control. In contrast, if the numerical value is low, this means that the recognition-output is hardly referred to at the time of executing the alarm and vehicle-control, signifying that the recognition-output before and after the scene will not necessarily require high accuracy and safety. Thus, the involvement degrees are set by the recognition-output request subunit 420 of the alarm and vehicle-control unit 400, and the table in Fig. 5, showing the involvement degrees, is referred to by the app-control unit 300.

Tables lined up in the center column of Fig. 5 are each a process-load conversion table, and respective calculations are made by the request-accuracy process-load conversion subunit 310 of the app-control unit 300, having received the involvement degree. A calculation is executed for estimating what extent to which a CPU process-load accounts for in the case where a numerical value expressed in terms of the involvement degree, as it is, is reflected in a process.

An example of calculation of a process-load with respect to the lateral-position at the low-speed lateral-velocity lane-deviation time is shown hereunder. In this case, the process-load of the lateral-position at the low-speed lateral-velocity lane-deviation time is calculated from the involvement degree of the lateral-position at the low-speed lateral-velocity lane-deviation time, while referring to the involvement degree of the alarm and vehicle-control, and the process-load of the lane-recognition unit, at the normal time. Lane-recognition unit process-load (the process-load of the lateral-position at the low-speed lateral-velocity lane-deviation time) = ([the involvement degree of the lateral-position detection process A at the low-speed lateral-velocity lane-deviation time] / [[the involvement degree of the lateral-position detection process A at the normal time] x [the load of the lateral-position detection process A at the normal time]

$$46 \approx 45.454545 \ldots = (50/33) \times 30$$

Thus, in the process-load conversion table, what extent to which the process-load accounts for is calculated on the basis of the involvement degree in order to realize the recognition-accuracy demanded by the alarm and vehicle-control side without reference to whether or not the operation of the lane-recognition appli is completed within the prescribed process cycle T.

Next, tables lined up in a column on the extreme right side in Fig. 5 are each a process-load redistribution table where the process-loads of the respective processes are redistributed such that the process-loads of the respective processes, calculated according to the process-load conversion table, can fall within the prescribed process cycle T.

The process-load redistribution table shows a result obtained by adding an adjustment such that the CPU process-loads as a whole will fall 100% or less after the redistribution of the CPU process-loads. However, the other processes Z exerting no influence on the recognition-accuracy, among the plural processes, are processes executed without fail regardless of lane-recognition-accuracy, and the process-load thereof is constant at all times. Accordingly, a calculation is made in the redistribution in such a way as not to affect the process-load of the other processes Z.

In the case where the grand total in the process-load conversion table exceeds 100%, with reference to a value with the involvement degree not higher than the involvement degree at the normal time, the process-load given in the process-load conversion table is secured. Then, with reference to a value with the involvement degree exceeding the involvement degree at the normal time, redistribution of the process-loads is executed such that the process-loads as a whole account for 100%.

For example, if the result of the process-load conversion table at the low-speed lateral-velocity lane-deviation time show that the lateral-position detection process A accounts for 46%, the yaw-angle detection process B 23%, the curvature detection process C 16%, and the other processes Z 20%, the redistribution is not applied the respective processes B, C, and Z which are maintained as they are. That is, a method for reducing the process-load is unavailable as to the processes Z, and since the CPU process-loads as to the respective processes B and C are lower than those at the normal time, there is the need for refraining from further reduction thereof, and therefore, the redistribution is not applied thereto.

On the other hand, a process-load share as to the process A is found higher than that at the normal time, so that a redistribution of the process-load is executed. The process-load of the process A is redistributed on the basis of the following formula:

$$100 - \text{(a process-load conversion value of the process B)} - \text{(a}$$

$$\text{process-load conversion value of the process C} - \text{(respective}$$

$$\text{process-load conversion values of the processes Z)}$$

$$= \text{a process-load of the process A after a redistribution}$$

$$100 - 23\% - 16\% - 20\% = 41\%$$

More specifically, the process-load share of the process A is altered by the redistribution from 46% to 41%. As a result, a process-load at the low-speed lateral-velocity lane-deviation time, after the redistribution, becomes 41% for the process A, 23% for the process B, 16% for the process C, and 20% for the processes Z.

Further, if there are plural logics where a share of the process-load is higher than that at the normal time, redistribution of the CPU loads is executed by taking the magnitude of each of the process-loads as well in the process-load conversion table into consideration. For example, if the process-load of the process A has a conversion value at 45%, the process-load of the process B has a conversion value at 35%, and there is the need for the sum of the respective process-loads of the processes A and B to account for 75%, redistribution values can be calculated by the following formula:

$$\text{Redistribution value of the process A:} \quad 42.2\% \approx 75\% * \{A(45\%)/$$

$$(A(45\%)+B(35\%))\}$$

$$\text{Redistribution value of the process B:} \quad 32.8\% \approx 75\% * \{B(35\%)/$$

$$(A(45\%)+B(35\%))\}$$

Thus, the process-load adjust subunit 320 executes the redistribution of the process-loads to a CPU capable of stably executing the alarm and the control with higher accuracy while ensuring the minimum recognition-accuracy in the process-load redistribution table. The execution request subunit 330 issues a request for the execution of a recognition-process for the next frame on the basis of the respective redistribution values of the process-loads to the lane-recognition unit 210.

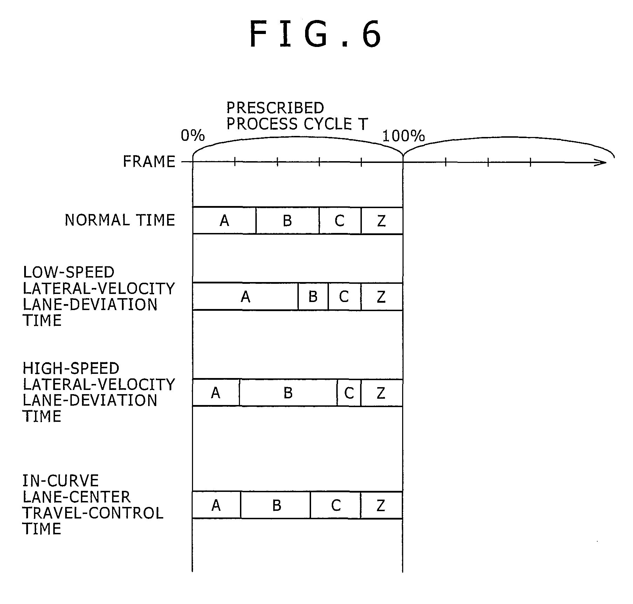

Fig. 6 is view showing respective ratios of the process-loads in each of the plural detection processes at the respective scenes.

At respective scenes (the low-speed lateral-velocity lane-deviation time, the high-speed lateral-velocity lane-deviation time, and the in-curve lane-center travel-control time), where the alarm and vehicle-control is executed, aside from the normal time, stable alarm and control is executed with higher accuracy by dynamically changing the distribution of the process-loads of the respective processes A through C at the lane-recognition. It can be confirmed that the process-load of the recognition-process is raised in order to enhance recognition-output accuracy to which importance is attached at the time of executing the alarm and control at the respective scenes.

Because the vehicle is moving in the lateral direction at a low speed at, for example, the low-speed lateral-velocity lane-deviation time, information on the lateral-position largely affects the result of the alarm and vehicle-control. Accordingly, the process-load of the process A is raised higher than that at the normal time. Then, the vehicle is moving in the lateral direction at a high speed at the high-speed lateral-velocity lane-deviation time, so that information on the yaw angle largely affects the result of the alarm and vehicle-control. Accordingly, the process-load of the process B is raised higher than that at the normal time. Further, at the in-curve lane-center travel-control time, information on the yaw angle and the curvature largely affects the result of the alarm and vehicle-control rather than a little deviation in the lateral-position because a control is intended for the vehicle traveling along the center of a lane, along a curve. Accordingly, the respective process-loads of the processes B and C are raised higher than those at the normal time.

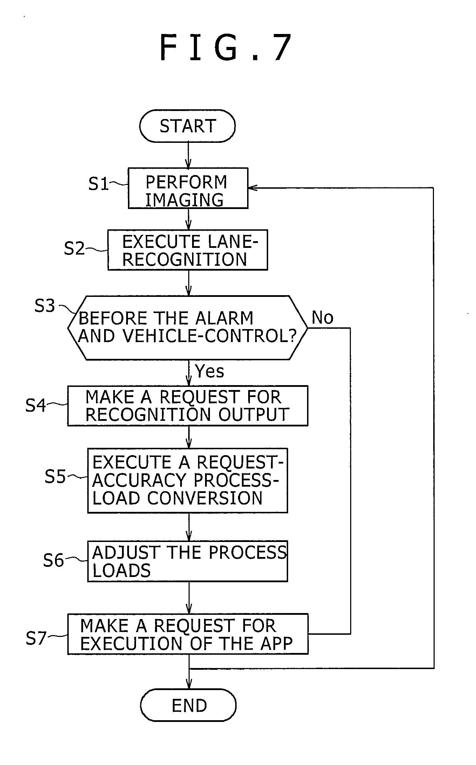

Fig. 7 is a process flow chart of an alarm and vehicle-control system using the onboard environment-recognition device.

In step S1, an image of the environment of the driver's own vehicle is picked up by the imaging unit 110 (an onboard camera) and in step S2, lane-recognition-processes (the processes A through C, Z) are executed by making use of the image. Initial operations are executed with the process-loads at the normal time, kept as they are.

In step S3, a determination is made on whether or not the vehicle behavior and the recognition result of the lane-recognition-process represent the respective alarm and vehicle-control scenes at a first time from a state where the vehicle behavior and the recognition result of the lane-recognition-process become usable by the alarm and vehicle-control unit 400. If the lane-recognition result is unrecognized or the determination is made as premature for use in the alarm and vehicle-control with the elapse of little time after the start of an operation, a determination is made as No.

**[0055]** Under a state of the lane-recognition that can be utilized for the alarm and vehicle-control, the prediction determination subunit 410 of the alarm and vehicle-control unit 400 executes a prediction determination on the likelihood of occurrence of the alarm and vehicle-control from now on, whether or not the alarm and vehicle-control is due for execution, etc. And if it is determined that the vehicle behavior, and the recognition result of the lane-recognition-process represent the respective alarm and vehicle-control scenes at the first time, the determination is made as Yes, and if the alarm and vehicle-control is other than the description as above, and the prediction determination for execution cannot be made, a determination is made as No.

**[0056]** If the determination as No is made in the step S3 , only the process at the normal time shown in Fig. 5 is executed, the flow proceeds along a path indicated as No, and the recognition-processes of the lane-recognition appli are executed without changing from the recognition-processes so far executed, whereupon the flow reaches the step of the image pickup by the camera, thereby repeating the processes for the next frame.

If the determination is Yes in the step S3, that is, if the prediction determination subunit 410 determines that the alarm and vehicle-control is due for execution from now on, the process proceeds to step S4 in order to predict at which scene and how many seconds later the alarm and vehicle-control is due for execution.

In the case where a prediction made by the prediction determination subunit 410 is reached prior to prescribed time, the description of the alarm and vehicle-control, predicted to be executed at a prescribed time, and a time thereof, are conveyed to the recognition-output request subunit 420, in the step S4. The recognition-output request subunit 420 makes a request for enhancement in the accuracy of the recognition output, necessary for execution of more appropriate the alarm and vehicle-control, according to the description of the alarm and vehicle-control to be executed after the prescribed time.

Then, an output that is not used for the alarm and vehicle-control after the prescribed time is stopped, and the accuracy of an output to which no importance is attached is lowered to thereby lessen the CPU process-load, whereas a process-load to an output to which importance is attached is raised, thereby contributing to enhancement in the accuracy as well as the stability of the alarm and vehicle-control due for execution.

Stoppage, accuracy reduction, accuracy maintenance, accuracy enhancement etc. with respect to the recognition output are adjusted on the basis of the index called the involvement degree involved in the alarm and vehicle-control. By taking what extent to which the recognition output is involved in the alarm and vehicle-control into consideration, the involvement degree is converted into numbers.

High accuracy as well as high safety of information used in the alarm and vehicle-control is secured by reflecting the accuracy of the recognition output as required, and achievement of higher accuracy and higher safety from a driver's point of view is tried by allowing deterioration in the accuracy of information that is not utilized, or is unimportant.

In connection with the involvement degree, accuracy required in order to execute highly accurate alarm and vehicle-control without taking into consideration whether or not the recognition application is completed within the prescribed process cycle T, and the minimum accuracy that need be guaranteed are reflected in the index called the involvement degree.

In step S5, a request-accuracy process-load conversion is executed. For example, if the respective processes A through C, and Z are not completed within the prescribed process cycle T, and process time is prolonged, this will result in delayed outputting of the recognition result, which is basically undesirable as a factor for delay in the alarm and vehicle-control. For this reason, it is necessary to determine at first whether or not the process is completed within the prescribed process cycle T.

Accordingly, in order to realize the recognition-accuracy required of the involvement degree, it is necessary to calculate what extent to which the process-load accounts for. Accordingly, a process-load at the predicted alarm and vehicle-control scene, before adjustment, is estimated in the step S5, while referring to the involvement degree of the predicted alarm and vehicle-control scene, the involvement degree at the normal time, the process-load at the normal time. This request-accuracy process-load conversion is executed at the request-accuracy process-load conversion subunit 310 of the app-control unit 300.

Adjustment of the process-loads of the respective processes of the lane-recognition appli is executed in step S6. If the respective processes of the lane-recognition are completed at an early stage within the prescribed process cycle T, or are obviously not completed within the prescribed process cycle T, the adjustment is made by the redistribution of the process-loads of the respective processes. In the case where the respective processes are completed at an early stage within the prescribed process cycle T, there is executed such an adjustment as to complete all the processes within the prescribed process cycle T, while all the ratios are adding up to 100% in order that the recognition-accuracy as a whole be enhanced by the same rate. With respect to the process-load ratios in the process-load redistribution table, the total loads that can be processed within a prescribed cycle of one appli are to account for 100%.

On the other hand, if it is evident that not all the processes are fully completed within the prescribed process cycle T, precluding completion of all the processes, it is necessary to cause reduction by the process-load of at least one process among the respective processes. If the involvement degree is not higher in numerical value than the involvement degree for a normal process, as compared with the involvement degree for the normal process, a process-load associated with the involvement degree is to be guaranteed, and an item high in process-load for the sake of enhancement in accuracy is selected as a target for reduction. In order to obtain the process-loads such that the process-loads of the respective processes are all added up to account for 100%, the grand total of items indicating enhancement in accuracy is adjusted. An adjustment process in detail is as described in Fig. 5. This process-load adjustment is executed by the process-load adjust subunit 320 of the app-control unit 300.

After the adjustment of the process-load is made in the step S6, a request for the execution of the appli is made in step S7 such that the respective detection units 211 through 213 execute the respective recognition-processes according to the process-load s after the adjustment. The request for the execution of the appli is issued from the execution request subunit 330 of the app-control unit 300 to the lane-recognition unit 210.

Effects and examples of process-loads distribution, with respect to the respective scenes, are given hereunder.

(1) As to the low-speed lateral-velocity lane-deviation time

In the case of lane-deviation at the low-speed lateral-velocity lane-deviation time, it can be presumed that the inclination of the vehicle, against the lane, is small, and there is not so high necessity for the detection accuracy of the yaw angle indicating the inclination of the vehicle, against the lane. It is possible to predict the alarm and vehicle-control expected from now on simply by looking at a momentarily changing value of the lateral-position. Further, the necessity of updating the curvature immediately prior to the alarm and vehicle-control is also regarded low.

For this reason, with the understanding that the lateral-position is largely involved in the alarm and vehicle-control, the involvement degree is raised higher than that at the normal time, and with respect to others such as the yaw angle and the curvature, the involvement degree is lowered. By so doing, the detection accuracy as well as the stability of the lateral-position, serving as an important criteria for the alarm and vehicle-control at the low-speed lateral-velocity lane-deviation time, are enhanced, and the respective process-loads of the yaw angle and the curvature are checked, thereby enabling the accuracy as well as the stability of the alarm and vehicle-control, imparted to a driver, to be enhanced.

(2) As to the high-speed lateral-velocity lane-deviation time

In the case of lane-deviation at the high-speed lateral-velocity lane-deviation time, the inclination of the vehicle, against the lane, is large, and the detection accuracy of the yaw angle indicating the inclination of the vehicle, against the lane, will become an important factor in predicting whether or not the lane-deviation will occur from now on. Further, accuracy to a certain extent is required of the lateral-position as well. On the other hand, the necessity of updating the curvature immediately prior to the alarm and vehicle-control is regarded low.

For this reason, with the understanding that the yaw angle is largely involved in the alarm and vehicle-control, the involvement degree is raised higher than that at the normal time, and the involvement degree with respect to the lateral-position is nearly maintained to maintain the accuracy thereof, whereas the involvement degree with respect to the curvature is largely lowered. By so doing, the detection accuracy and the stability of the yaw angle, serving as an important criterion for the alarm and vehicle-control at the high-speed lateral-velocity lane-deviation time, are enhanced, and the process-load of the curvature is checked, thereby enabling the accuracy as well as the stability of the alarm and vehicle-control, imparted to a driver, to be enhanced.

(3) As to the in-curve lane-center travel-control time

At the in-curve lane-center travel-control time, the driver's own vehicle being caused to travel along a curve of the road becomes an important factor. Accordingly, even if an error to an extent occurs to detection accuracy with respect to the lateral-position in a lane etc. , this has a small effect. Further, even if an updating cycle of the lateral-position becomes longer to an extent, this will not give a large effect. On the other hand, the yaw angle indicating the inclination of the driver's own vehicle, against the lane, and the curvature of a curve, indicating a manner in which the curve is bent, each become an important factor in order to cause the driver's own vehicle to travel along the road. For this reason, with respect to the yaw angle, and the curvature, largely affecting the alarm and vehicle-control, the involvement degree is raised higher than that at the normal time, whereas the lateral-position which does not largely affect the control is dealt with by lowering the involvement degree. By so doing, the detection accuracy as well as the stability of the yaw angle, and the curvature, respectively, serving as an important criteria for the alarm and vehicle-control at the in-curve lane-center travel-control time, are enhanced, and the process-load of the lateral-position is checked, thereby enabling the accuracy as well as the stability of the alarm and vehicle-control, imparted to a driver, to be enhanced.

(a) in Fig. 8 is a view showing an example of outputs of the alarm and vehicle-control, against a sudden lane-deviation, and (b) in Fig. 8 is a view schematically showing a sudden lane-deviation state. The embodiment of Fig. 8 shows an example in the case where the involvement degree of the curvature is 0 at a sudden lane-deviation time. Further, a pair of solid lines, as shown in (b) in Fig. 8, indicates the boundary of a lane 11, and a dotted line indicates the center of the lane 11.

In the case where a driver's own vehicle 1 suddenly deviates rightward from the lane 11 while traveling in the lane 11 that is straight line-like in shape, the accuracy of the alarm and vehicle-control, as a whole, is more enhanced by specialization in highly-accurate calculation of the lateral position and the yaw angle rather than by calculation of the alarm and the control at the lane-deviation time, while taking an item for the curvature into consideration. Accordingly, the involvement degree of the curvature is set at 0, and the respective processes A and B only are executed, omitting the process C. This is one of the embodiments where the recognition-output obviously undergoes a change before, and after the alarm and vehicle-control.

(a) in Fig. 9 is a view showing an example of outputs of a lane-maintenance control along a curve, and (b) in Fig. 9 is a view schematically showing a curve-traveling state.
(a) in Fig. 9 shows an example in the case of reducing the number of times that the process A is executed by assuming that the involvement degree of the lateral-position is set at 0 twice in three frames at the time of the lane-maintenance control along a curve 12. Since priority is assigned to traveling in the manner in which the curve is bent at the time of the lane-maintenance control along the curve 12, importance is attached to safe traveling along the curve rater than to deviation to an extent, from the center of the lane. Accordingly, calculation is made by attaching importance to the item for the curvature, and even if updating of the lateral-position is delayed to an extent, this is considered to pose no problem. The involvement degree of the lateral-position is set at 0, and the output thereof is ignored, whereas importance is attached to the detection result of the yaw angle as well as the curvature, thereby enhancing the accuracy of the alarm and vehicle-control as a whole.

With the onboard environment-recognition device having the configuration described as above, the respective ratios of the process-loads with respect to the plural recognition-processes are varied according to the state of the vehicle to thereby cause a reduction in the process-load with respect to the recognition-process low in importance, while increasing the process-load with respect to the recognition-process high in importance by an extent of the reduction. Accordingly, a finer and more correct recognition-process can be executed, and the alarm and vehicle-control based on the description of such recognition as described can be correctly executed. In other words, it is possible to find the recognition result with high accuracy in the circumstances where the alarm and vehicle-control are ready for actuation, thereby enabling the recognition of the ambient environment of a vehicle to be realized with higher precision. Accordingly, it is possible to achieve correction of timing for the alarm and vehicle-control, enhancement in stability, and higher estimation accuracy as well as calculation accuracy, according to the state of the vehicle.

[Second Embodiment]

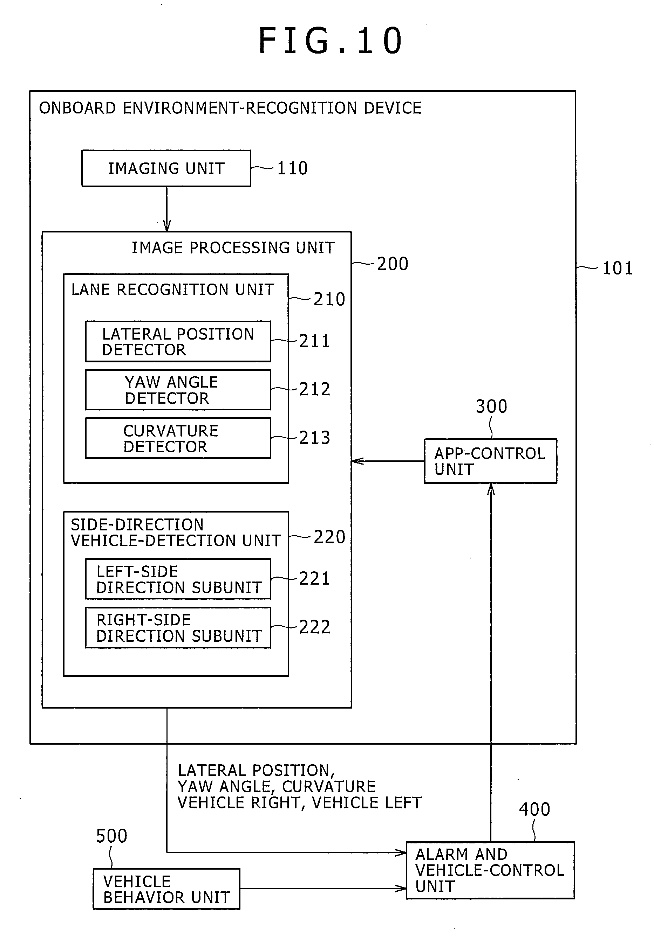

Next, a second embodiment of the invention is described hereinafter. Fig. 10 is a block diagram of an onboard environment-recognition device according to the second embodiment of the invention. In the figure, constituent elements identical to those according to the first embodiment are denoted by the same reference signs, respectively, thereby omitting detailed description thereof.
The onboard environment-recognition device 101 is provided with an image-processing unit 200 for processing an image taken by an imaging unit 110. The image-processing unit 200 has plural applications, that is, multi-apps for performing both lane-recognition and side-direction vehicle-detection, the image-processing unit 200 having a lane-recognition unit 210 and a side-direction vehicle-detection unit 220.
The side-direction vehicle-detection unit 220 includes a left-side direction subunit 221 and a right-side direction subunit 222, each serving as a direction subunit capable of adjusting output accuracy involved in alarm and vehicle-control. The left-side direction subunit 221 detects presence of a vehicle in the left-side direction of a driver's own vehicle, and the right-side direction subunit 222 detects presence of a vehicle in the right-side direction of the driver's own vehicle.
The image-processing unit 200 outputs the respective recognition results of the lane-recognition unit 210 and the side-direction vehicle-detection unit 220 to an alarm and vehicle-control unit 400. The alarm and vehicle-control unit 400 makes a prediction on the execution of the alarm and vehicle-control by combining vehicle behavior information from a vehicle behavior unit 500 therewith, thereby making a determination.

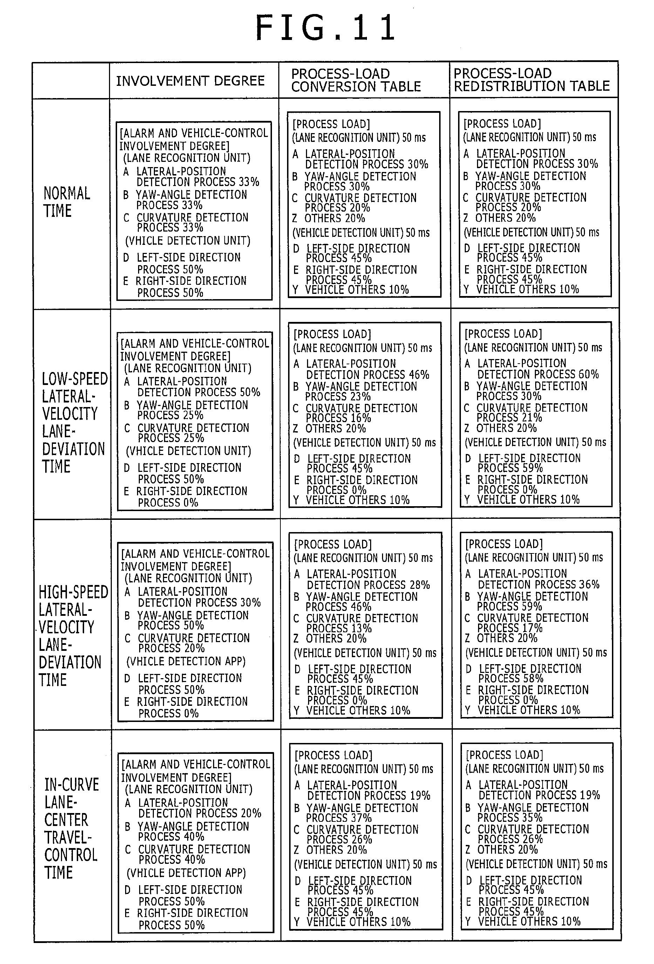

Next, a difference in operation between respective scenes is described hereinafter with reference to Figs. 11 through 14.

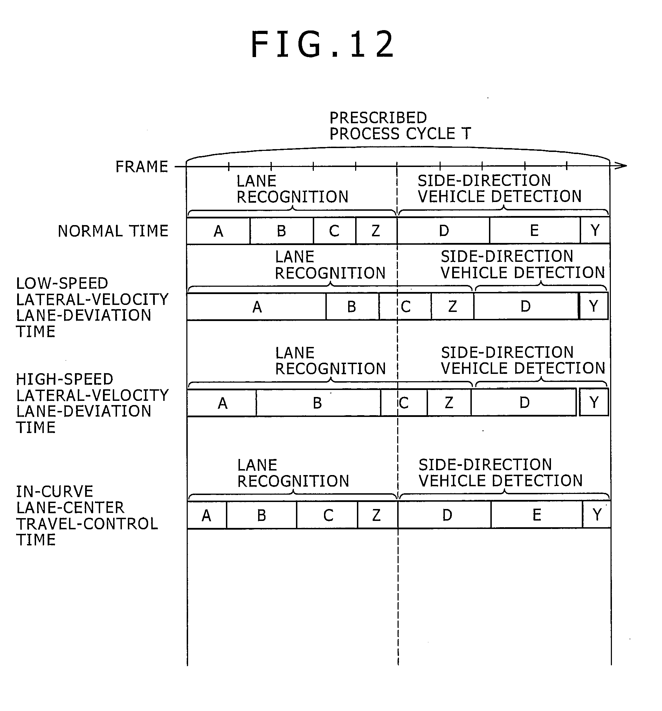

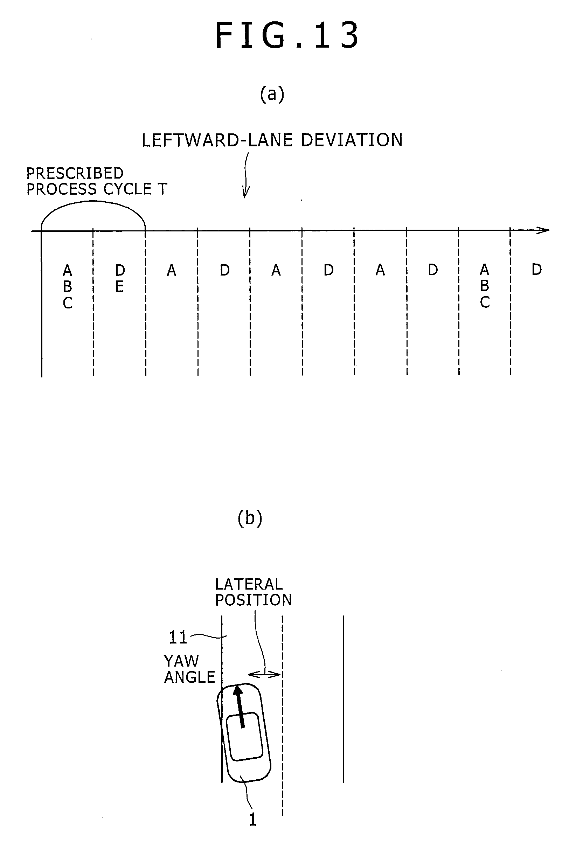

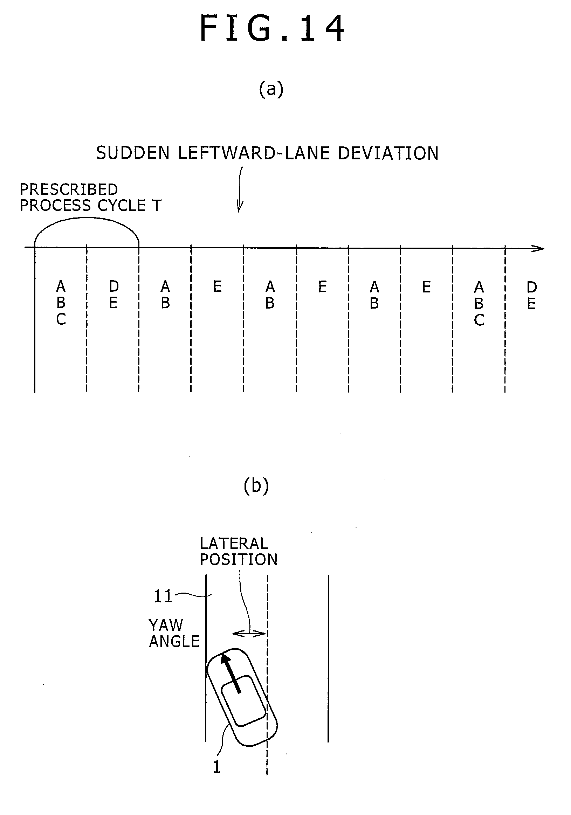

Fig. 11 is a table showing the respective involvement degrees of plural processes and the ratios of respective process-loads at the respective scenes, Fig. 12 is a view showing the ratios of the process-loads with respect to the plural processes, (a) in Fig. 13 is a view showing an example of outputs of an alarm and vehicle-control at a low-speed lateral-velocity left lane-deviation time, (b) in Fig. 13 is a view schematically showing a lane-deviation state, (a) in Fig. 14 is a view showing an example of outputs of an alarm and vehicle-control at a high-speed lateral-velocity left lane-deviation time, and (b) in Fig. 14 is a view schematically showing a sudden lane-deviation state.

In Figs. 11 and 12, percent (%) displays in a process-load redistribution table are displays that are calculated based on the premise that default-process time 50 ms of the lane-recognition unit is 100%, and with respect to the vehicle-detection unit as well, calculation is made on the remise that the default-process time 50 ms is 100%. If the default-process time for one appli differs from that for the other appli, and a calculation is made such that the processes combined with each other can fall within the prescribed process cycle T, this will pose no problem with the total process-load. Accordingly, if default-process time lengths for the respective applis differ from each other, there can be the case where the total percentage of two applis in the process-load redistribution table exceeds 200%.

(1) As to the low-speed lateral-velocity left lane-deviation time

In the case of lane-deviation at the low-speed lateral-velocity lane-deviation time, it can be presumed that the inclination of a driver's own vehicle 1, against a lane 11, is small, as shown in (b) in Fig. 13. Accordingly, with respect to the lane-recognition, the lane-deviation has not so high necessity for the recognition-accuracy of the yaw angle indicating the inclination of the driver's vehicle 1, against the lane 11. It is possible to predict the alarm and vehicle-control expected from now on simply by looking at a momentarily changing value of the lateral-position. Further, with respect to the curvature, the necessity of updating the curvature immediately prior to the alarm and vehicle-control is also regarded low.

For this reason, with the understanding that the lateral-position is largely involved in the alarm and vehicle-control, the involvement degree of the lateral-position detection process A is raised from 33% at the normal time to 50%, as shown in Fig. 11, and with respect to the yaw angle, and the curvature, the involvement degrees of the respective processes B and C are lowered from 33% at the normal time to 25%.

By so doing, the detection accuracy as well as the stability of the lateral-position, serving as an important criteria for the alarm and vehicle-control at the low-speed lateral-velocity lane-deviation time, is enhanced, and the respective process-loads of the yaw angle and the curvature are checked, thereby enabling the accuracy as well as the stability of the alarm and vehicle-control, imparted to a driver, to be enhanced.

With reference to side-direction vehicle-detection, it is regarded that temporary stoppage of a right-side direction process poses no problem on the understanding that detection of a vehicle in an adjacent lane, on a side of a driving lane, away from the driver's own vehicle 1, is not necessarily required at the time of leftward lane-change.

Accordingly, the side-direction vehicle-detection, in the left-side direction only, is executed with the involvement degree 50% identical to the involvement degree 50% at the normal time, as shown in Fig. 11, and with respect to the right-side direction on the opposite side, the involvement degree is set at 0% signifying temporary stoppage of vehicle-detection.

By so doing, the CPU load can be allocated in order to enhance the recognition-accuracy of the output associated with the alarm and vehicle-control by reducing the process-loads unnecessary for the alarm and vehicle-control at the low-speed lateral-velocity lane-deviation time, thereby enabling the accuracy as well as the stability of the alarm and vehicle-control, as felt by the driver, to be enhanced.

Finally, only items related to recognition-output accuracy are readjusted, as shown in a process-load redistribution table. In Fig. 11, other processes Z (20%) of the lane-recognition unit 210, and vehicle and other processes Y (10%) of the side-direction vehicle-detection unit 220 are necessary processes, having no bearing on recognition-output accuracy, and necessary processes having no bearing on recognition-accuracy, respectively.

At the time of redistribution, these items (other processes Z, and vehicle and other processes Y) are regarded other than the targets for the redistribution, and an adjustment is executed such that the grand total of the respective ratios of all the items will account for 200% in the case of two applications (refer to a normal time in Fig. 12).

In this case, in contrast to the case of one application, even if load-distribution is executed such that CPU process-load regions that are originally distributed as respective process-load portions of the side-direction vehicle-detection are utilized by the, lane-recognition at the low-speed lateral-velocity lane-deviation time, the high-speed lateral-velocity lane-deviation time, or the in-curve lane-center travel-control time, as shown in Fig. 12, this will pose no problem.

Multi-applications enable more adaptable distribution of the process-loads with respect to the CPU process-loads to thereby increase effectiveness of enhancement in accuracy. With reference to a lane-deviation scene, in particular, a process for vehicle-detection in the adjacent lane, on a side opposite from the lane-deviation, the process being no longer required, is omitted, thereby attaining higher accuracy and higher stability with respect to the lane-recognition-process important in the alarm and vehicle-control. Thus, the alarm and vehicle-control, higher in accuracy as well as stability, can be offered to the driver.

(2) As to the high-speed lateral-velocity left lane-deviation time

In the case of lane-deviation at the high-speed lateral-velocity left lane-deviation time, it can be presumed that the inclination of the driver's own vehicle 1, against the lane 11, is large, as shown in Fig. 14. Accordingly, with respect to the lane-deviation, the detection accuracy of the yaw angle indicating the inclination of the driver's vehicle 1, against the lane 11, becomes an important factor in prediction on whether or not lane-deviation will occur. Further, accuracy to a certain extent is required of the lateral-position as well. On the other hand, the necessity of updating the curvature immediately prior to the alarm and vehicle-control is regarded low.

For this reason, with the understanding that the yaw angle is largely involved in the alarm and vehicle-control, the involvement degree of the yaw-angle detection process B is raised from 33% at the normal time to 50%, as shown in Fig. 11, and with respect to the lateral position, the involvement degree of the lateral-position detection process A is substantially maintained, and the accuracy thereof is held at 30%, whereas with respect to the curvature, the involvement degree of the curvature detection process C is largely lowered from 33% at the normal time down to 20%.

By so doing, the detection accuracy as well as the stability of the yaw angle, serving as an important criteria for the alarm and vehicle-control at the high-speed lateral-velocity lane-deviation time, is enhanced, and the process-load of the curvature is checked, thereby enabling the accuracy as well as the stability of the alarm and vehicle-control, imparted to the driver, to be enhanced.

With reference to side-direction vehicle-detection, it is regarded that the temporary stoppage of the right-side direction process poses no problem on the understanding that the detection of the vehicle in the adjacent lane, on the side of a driving lane, away from the driver's own vehicle 1, is not necessarily required at the time of leftward lane-change, as is the case with the low-speed lateral-velocity left lane-deviation time.

Accordingly, the side-direction vehicle-detection, for the left-side direction only, is executed with the involvement degree 50% identical to the involvement degree 50% at the normal time, as shown in Fig. 11, and with respect to the right-side direction on the opposite side, the involvement degree is set at 0% signifying temporary stoppage of vehicle-detection.

By so doing, the CPU load can be allocated in order to enhance the recognition-accuracy of output accuracy of the output associated with the alarm and vehicle-control by reducing the process-loads unnecessary for the alarm and vehicle-control at the high-speed lateral-velocity lane-deviation time, thereby enabling the accuracy as well as the stability of the alarm and vehicle-control, as felt by the driver, to be enhanced.

Redistribution of the CPU process-loads is executed in the same manner as described above. The CPU process-load regions distributed as the respective process-load portions of the side-direction vehicle-detection are each allocated to the process-load of the lane-recognition, as shown in process-load allocation at the high-speed lateral-velocity lane-deviation time of Fig. 12, thereby combining the lane-recognition desiring of a higher process-load during the lane-deviation with the side-direction vehicle-detection having no effect on a user even if the process-load thereof is lowered, whereupon the recognition-accuracy of a determination at the time of a lane-deviation can be enhanced without impairing user's convenience.

(3) As to the in-curve lane-center travel-control time

For the driver's own vehicle to travel along a curve of the road becomes an important factor at the in-curve lane-center travel-control time. Accordingly, even if an error to an extent occurs to detection accuracy with respect to the lateral-position etc., this has a small effect. Further, even if an updating cycle of the lateral-position becomes longer to an extent, this will not give a large effect.

On the other hand, the yaw angle indicating the inclination of the driver's own vehicle, against the lane, and the curvature of a curve, indicating a manner in which the curve is bent, each become an important factor in order to cause the driver's own vehicle to travel along the road. For this reason, with respect to the yaw angle as well as the curvature, largely affecting the alarm and vehicle-control, the involvement degree is raised, whereas the lateral-position which does not largely affect the control is dealt with by lowering the involvement degree.

With respect to the side-direction vehicle-detection, the involvement degree at the normal time is adopted in order to monitor respective vehicles in adjacent lanes on the right and left sides, respectively. For this reason, the process-load portions of the vehicle-detection, as they are, are utilized by the vehicle-detection, and redistribution of the CPU loads, for varying the output-accuracy within the process-load portion of the lane-recognition, is executed. The process-loads after the redistribution are given in Fig. 12.

Fig. 13 is the view showing the example of the outputs of the alarm and vehicle-control at the low-speed lateral-velocity left lane-deviation time, and Fig. 14 is the view showing the example of the outputs of the alarm and vehicle-control at the high-speed lateral-velocity left lane-deviation time.

Figs. 13 and 14 each are a view showing examples of respective recognition-outputs in the case where the involvement degree is manipulated to an extreme. In the case of a normal recognition-output, the respective recognition-outputs of the lane-recognition (the lateral-position, the yaw angle, the curvature), and the vehicle-recognition (a left vehicle, a right vehicle) are outputted. However, in an example where an extreme redistribution of the process-loads is executed at the low-speed lateral-velocity left lane-deviation time, as shown in Fig. 13, such allocation of the involvement degree as to stop the respective recognition-output results of the yaw angle (the process B), the curvature (the process C), and the right vehicle (process E) is executed by largely adjusting the involvement degrees, thereby executing redistribution of the process-loads to the lateral-position (the process A), and the curvature (the process C). By so doing, it becomes possible to let a user utilizing the alarm and vehicle-control to virtually feel as if the accuracy of the alarm and vehicle-control is enhanced.

Similarly, in an example where an extreme redistribution of the process-loads is executed at the high-speed lateral-velocity left lane-deviation time, as shown in Fig. 14, such allocation of the involvement degree as to stop the respective recognition-output results of the curvature (the process C), and the left vehicle (process D) is executed by largely adjusting the involvement degree, thereby executing redistribution of the process-load s to the lateral-position (the process A), the yaw angle (the process B) and the right vehicle (process E). By so doing, it becomes possible to let a user utilizing the alarm and vehicle-control to feel as if the accuracy of the alarm and vehicle-control is enhanced.

With the onboard environment-recognition device having the configuration described as above, process-resolution, image-resolution, a recognition-distance, a process cycle, process timing, etc. with respect to the respective applications can be altered such that accuracy of information on the recognition result utilized in the alarm and vehicle-control is enhanced through linkup with the alarm and vehicle-control unit for executing the alarm and vehicle-control by making use of information on the recognition result. Accordingly, the recognition result can be found with high accuracy under circumstances where the alarm and vehicle-control are ready for actuation, thereby enabling the recognition of the ambient environment of a vehicle to be realized with higher accuracy.

While the embodiments of the present invention have been described in detail as above, it is to be understood that the invention be not limited thereto, and that various modification in design may be made without departing from the spirit or the scope of the present invention and the appended claims. For example, the embodiments described as above are for illustrative purposes only for easy understanding of the present invention, and the present invention is not necessarily limited to embodiments having all the configurations described. Further, part of the configuration of one embodiment can be replaced by the configuration of the other embodiment, and the configuration of the other embodiment can be added to the configuration of one embodiment. Still further, addition and deletion and replacement can be applied to part of the configurations of the respective embodiments,

List of Reference Signs

|   |   |
|---|---|
| 100: | onboard environment-recognition device |
| 110: | imaging unit |
| 210: | lane-recognition unit |
| 211: | lateral-position detection unit |
| 212: | yaw-angle detection unit |
| 213: | curvature detection unit |
| 221: | left-side direction subunit |
| 222: | right-side direction subunit |
| 300: | app-control unit |
| 310: | request-accuracy process-load conversion subunit |
| 320: | process-load adjust subunit |
| 330: | execution request subunit |
| 400: | alarm and vehicle-control unit |
| 410: | prediction determination subunit |
| 420: | recognition-output request subunit |
| 430: | alarm and vehicle-control execution subunit |
| 500: | vehicle behavior unit |
| 510: | vehicle speed subunit |

520: wheel speed subunit
530: steering angle subunit
540: yaw rate subunit
550: lateral G subunit

**Claims**

1. An onboard environment-recognition device for recognizing an ambient environment of a driver's own vehicle on the basis of an image taken by an imaging unit, the onboard environment-recognition device comprising:

   a detection unit for detecting a plurality of detection-elements preset from the image; and
   an accuracy adjust unit for adjusting detection accuracy of at least one of the plural detection-elements, according to a state of the driver's own vehicle.

2. The onboard environment-recognition device according to claim 1, further comprising:

   a request-accuracy process-load conversion unit for converting process-loads when the detection unit executes respective detection processes for detecting the plural detection-elements on the basis of a request value of detection accuracy, preset for each of the plural detection-elements, according to the state of the driver's own vehicle, in the case where execution of an alarm and vehicle-control, based on the state of the driver's own vehicle, is predicted, and
   a process-load adjust unit for determining whether or not the detection processes fall within a prescribed process cycle in the case where the detection unit executes the respective detection processes at the process-load converted by the request-accuracy process-load conversion unit, thereby adjusting the process-load of at least one detection process of the plural detection processes according to a determination result.

3. The onboard environment-recognition device according to claim 2, wherein the process-load adjust unit lessens the process-load of at least one detection process of the plural detection processes when the detection process does not fall within the prescribed process cycle.

4. The onboard environment-recognition device according to claim 2, wherein the process-load adjust unit increases the process-load of at least one detection process of the plural detection processes when process-time for the detection process is shorter than the prescribed process cycle.

5. The onboard environment-recognition device according to claim 1, wherein at least one detection process of the plural detection processes is omitted according to the state of the driver' s own vehicle.

**Amended claims under Art. 19.1 PCT**

1. (after amendment) An onboard environment-recognition device for recognizing an ambient environment of a driver's own vehicle on the basis of an image taken by an imaging unit, the onboard environment-recognition device comprising:

   a detection unit for detecting a plurality of preset detection-elements from the image; and
   an accuracy adjust unit for converting a process load of the detection unit on the basis of a request value of detection accuracy, preset for each of the plural detection elements, and adjusting detection accuracy of at least one of the plural detection elements on the basis of the converted process load and a preset process cycle.

2. The onboard environment-recognition device according to claim 1, further comprising:

   a request-accuracy process-load conversion unit for converting process-loads when the detection unit executes respective detection processes for detecting the plural detection-elements on the basis of a request value of detection accuracy, preset for each of the plural detection-elements, according to the state of the driver's own vehicle, in the case where execution of an alarm and vehicle-control, based on the state of the driver's own vehicle, is predicted, and
   a process-load adjust unit for determining whether or not the detection processes fall within a prescribed process cycle in the case where the detection unit executes the respective detection processes at the process load converted by the request-accuracy process-load conversion unit, thereby adjusting the process load of at least one detection process of the plural detection processes according to a determination result.

**3.** The onboard environment-recognition device according to claim 2, wherein the process-load adjust unit lessens the process-load of at least one detection process of the plural detection processes when the detection process does not fall within the prescribed process cycle.

**4.** The onboard environment-recognition device according to claim 2, wherein the process-load adjust unit increases the process load of at least one detection process of the plural detection processes when process time for the detection process is shorter than the prescribed process cycle.

**5.** The onboard environment-recognition device according to claim 1, wherein at least one detection process of the plural detection processes is omitted according to the state of the driver's own vehicle.

**Statement under Art. 19.1 PCT**

1. Description of Amendment

With respect to Claim 1, an amendment for clarification is made, stating "an accuracy adjust unit for converting a process load of the detection unit on the basis of a request value of detection accuracy, preset for each of the plural detection-elements, and adjusting detection accuracy of at least one of the plural detection elements on the basis of the converted process load and a preset process cycle". This correction is supported by the description under the respective paragraphs [0025] through [0028] and [0052] through [0055].

2. Explanation

The description disclosing, implying, or motivating the description to the effect of "an accuracy adjust unit for converting a process load of the detection unit on the basis of a request value of detection accuracy, preset for each of the plural detection elements, and adjusting detection accuracy of at least one of the plural detection-elements on the basis of the converted process load and a preset process cycle" has never been mentioned in any of cited references.

# FIG.1

ONBOAD ENVIROMENT-RECOGNITION DEVICE

IMAGEING UNIT —110

LANE RECOGNITION UNIT —210
LATERAL POSITION DETECTOR —211
YAW ANGLE DETECTOR —212
CURVATURE DETECTOR —213

APP-CONTROL UNIT —300

—100

"OUTPUT"
LATERAL POSITION, YAW ANGLE, CURVATURE

"INVOLVENT DEGREE"
LATERAL POSITION, YAW ANGLE, CURVATURE

ALARM AND VEHICLE-CONTROL UNIT —400

VEHICLE BEHAVIOR UNIT
500 —

# FIG.2

500

VEHICLE BEHAVIOR UNIT

VEHICLE SPEED SUBUNIT —510

WHEEL SPEED SUBUNIT —520

STEERING ANGLE SUBUNIT —530

YAW RATE SUBUNIT —540

LATERAL G SUBUNIT —550

VEHICLE BEHAVIOR

# FIG.3

INVOLVEMENT
DEGREE

400

ALARM AND
VEHICLE-CONTROL UNIT

420

RECOGNITION-
OUTPUT REQUEST
SUBUNIT

"LANE RECOGNITION,
OUTPUT"
LATERAL POSITION,
YAW ANGLE,
CURVATURE

410

PREDICTION
DETERMINATION
SUBUNIT

VEHICLE BEHAVIOR

430

ALARM AND
VEHICLE-CONTROL
EXECUTION
SUBUNIT

# FIG.4

APP-CONTROL UNIT

~300

EXECUTION REQUEST
SUBUNIT

~330

PROCESS-LOAD
ADJUST SUBUNIT

~320

REQUEST-ACCURACY
PROCESS-LOAD
CONVERSION SUBUNIT

~310

"INVOLVEMENT DEGREE"
LATERAL POSITION,
YAW ANGLE,
CURVATURE

# FIG.5

| | INVOLVEMENT DEGREE | PROCESS-LOAD CONVERSION TABLE | PROCESS-LOAD REDISTRIBUTION TABLE |
|---|---|---|---|
| NORMAL TIME | ALARM AND VEHICLE-CONTROL INVOLVEMENT DEGREE<br><br>A LATERAL-POSITION DETECTION PROCESS 33%<br>B YAW-ANGLE DETECTION PROCESS 33%<br>C CURVATURE DETECTION PROCESS 33% | LANE-RECOGNITION UNIT PROCESS-LOAD<br><br>A LATERAL-POSITION DETECTION PROCESS 30%<br>B YAW-ANGLE DETECTION PROCESS 30%<br>C CURVATURE DETECTION PROCESS 20%<br>Z OTHERS 20% | LANE-RECOGNITION UNIT PROCESS-LOAD<br><br>A LATERAL-POSITION DETECTION PROCESS 30%<br>B YAW-ANGLE DETECTION PROCESS 30%<br>C CURVATURE DETECTION PROCESS 20%<br>Z OTHERS 20% |
| LOW-SPEED LATERAL-VELOCITY LANE-DEVIATION TIME | ALARM AND VEHICLE-CONTROL INVOLVEMENT DEGREE<br><br>A LATERAL-POSITION DETECTION PROCESS 50%<br>B YAW-ANGLE DETECTION PROCESS 25%<br>C CURVATURE DETECTION PROCESS 25% | LANE-RECOGNITION UNIT PROCESS-LOAD<br><br>A LATERAL-POSITION DETECTION PROCESS 46%<br>B YAW-ANGLE DETECTION PROCESS 23%<br>C CURVATURE DETECTION PROCESS 16%<br>Z OTHERS 20% | LANE-RECOGNITION UNIT PROCESS-LOAD<br><br>A LATERAL-POSITION DETECTION PROCESS 41%<br>B YAW-ANGLE DETECTION PROCESS 23%<br>C CURVATURE DETECTION PROCESS 16%<br>Z OTHERS 20% |
| HIGH-SPEED LATERAL-VELOCITY LANE-DEVIATION TIME | ALARM AND VEHICLE-CONTROL INVOLVEMENT DEGREE<br><br>A LATERAL-POSITION DETECTION PROCESS 30%<br>B YAW-ANGLE DETECTION PROCESS 50%<br>C CURVATURE DETECTION PROCESS 20% | LANE-RECOGNITION UNIT PROCESS-LOAD<br><br>A LATERAL-POSITION DETECTION PROCESS 28%<br>B YAW-ANGLE DETECTION PROCESS 46%<br>C CURVATURE DETECTION PROCESS 13%<br>Z OTHERS 20% | LANE-RECOGNITION UNIT PROCESS-LOAD<br><br>A LATERAL-POSITION DETECTION PROCESS 28%<br>B YAW-ANGLE DETECTION PROCESS 39%<br>C CURVATURE DETECTION PROCESS 13%<br>Z OTHERS 20% |
| IN-CURVE LANE-CENTER TRAVEL-CONTROL TIME | ALARM AND VEHICLE-CONTROL INVOLVEMENT DEGREE<br><br>A LATERAL-POSITION DETECTION PROCESS 20%<br>B YAW-ANGLE DETECTION PROCESS 40%<br>C CURVATURE DETECTION PROCESS 40% | LANE-RECOGNITION UNIT PROCESS-LOAD<br><br>A LATERAL-POSITION DETECTION PROCESS 19%<br>B YAW-ANGLE DETECTION PROCESS 37%<br>C CURVATURE DETECTION PROCESS 25%<br>Z OTHERS 20% | LANE-RECOGNITION UNIT PROCESS-LOAD<br><br>A LATERAL-POSITION DETECTION PROCESS 19%<br>B YAW-ANGLE DETECTION PROCESS 36%<br>C CURVATURE DETECTION PROCESS 25%<br>Z OTHERS 20% |

# FIG.6

PRESCRIBED
PROCESS CYCLE T

0%                                        100%

FRAME

| NORMAL TIME | A | B | C | Z |

| LOW-SPEED LATERAL-VELOCITY LANE-DEVIATION TIME | A | B | C | Z |

| HIGH-SPEED LATERAL-VELOCITY LANE-DEVIATION TIME | A | B | C | Z |

| IN-CURVE LANE-CENTER TRAVEL-CONTROL TIME | A | B | C | Z |

# F I G . 7

```
              ( START )
                  │
                  ▼
  S1───  PERFORM         ◄───────────────┐
         IMAGING                         │
                  │                      │
                  ▼                      │
  S2───  EXECUTE LANE-                   │
         RECOGNITION                     │
                  │                      │
                  ▼                      │
  S3──  BEFORE THE ALARM        No       │
        AND VEHICLE-CONTROL? ──────┐     │
                  │                │     │
                  │ Yes           │     │
                  ▼                │     │
  S4───  MAKE A REQUEST FOR       │     │
         RECOGNITION OUTPUT       │     │
                  │                │     │
                  ▼                │     │
  S5───  EXECUTE A REQUEST-       │     │
         ACCURACY PROCESS-        │     │
         LOAD CONVERSION          │     │
                  │                │     │
                  ▼                │     │
  S6───  ADJUST THE PROCESS       │     │
         LOADS                    │     │
                  │                │     │
                  ▼                │     │
  S7───  MAKE A REQUEST FOR  ◄─────┘     │
         EXECUTION OF THE APP ───────────┘
                  │
                  ▼
              ( END )
```

# FIG.8

## (a)

SUDDEN LANE DEVIATION

PRESCRIBED
PROCESS CYCLE T

FRAME

| A B C | A B C | A B | A B | A B | A B | A B C |

## (b)

LATERAL
POSITION

YAW
ANGLE

11

1

# FIG.9

(a)

TRAVELING ALONG A CURVE

PRESCRIBED
PROCESS CYCLE T

FRAME

| A B C | B C | B C | A B C | B C | B C | A B C |

(b)

12

LATERAL
POSITION

CURVATURE RADIUS R

YAW
ANGLE

CURVATURE $\rho = 1/R$

1

# FIG.10

ONBOARD ENVIRONMENT-RECOGNITION DEVICE

~101

IMAGING UNIT ~110

IMAGE PROCESSING UNIT ~200

LANE RECOGNITION UNIT ~210

LATERAL POSITION DETECTOR ~211

YAW ANGLE DETECTOR ~212

CURVATURE DETECTOR ~213

SIDE-DIRECTION VEHICLE-DETECTION UNIT ~220

LEFT-SIDE DIRECTION SUBUNIT ~221

RIGHT-SIDE DIRECTION SUBUNIT ~222

300

APP-CONTROL UNIT

LATERAL POSITION, YAW ANGLE, CURVATURE VEHICLE RIGHT, VEHICLE LEFT

400

500

VEHICLE BEHAVIOR UNIT

ALARM AND VEHICLE-CONTROL UNIT

# FIG.11

| | INVOLVEMENT DEGREE | PROCESS-LOAD CONVERSION TABLE | PROCESS-LOAD REDISTRIBUTION TABLE |
|---|---|---|---|
| NORMAL TIME | [ALARM AND VEHICLE-CONTROL INVOLVEMENT DEGREE]<br>(LANE RECOGNITION UNIT)<br>A LATERAL-POSITION DETECTION PROCESS 33%<br>B YAW-ANGLE DETECTION PROCESS 33%<br>C CURVATURE DETECTION PROCESS 33%<br>(VHICLE DETECTION UNIT)<br>D LEFT-SIDE DIRECTION PROCESS 50%<br>E RIGHT-SIDE DIRECTION PROCESS 50% | [PROCESS LOAD]<br>(LANE RECOGNITION UNIT) 50 ms<br>A LATERAL-POSITION DETECTION PROCESS 30%<br>B YAW-ANGLE DETECTION PROCESS 30%<br>C CURVATURE DETECTION PROCESS 20%<br>Z OTHERS 20%<br>(VEHICLE DETECTION UNIT) 50 ms<br>D LEFT-SIDE DIRECTION PROCESS 45%<br>E RIGHT-SIDE DIRECTION PROCESS 45%<br>Y VEHICLE OTHERS 10% | [PROCESS LOAD]<br>(LANE RECOGNITION UNIT) 50 ms<br>A LATERAL-POSITION DETECTION PROCESS 30%<br>B YAW-ANGLE DETECTION PROCESS 30%<br>C CURVATURE DETECTION PROCESS 20%<br>Z OTHERS 20%<br>(VEHICLE DETECTION UNIT) 50 ms<br>D LEFT-SIDE DIRECTION PROCESS 45%<br>E RIGHT-SIDE DIRECTION PROCESS 45%<br>Y VEHICLE OTHERS 10% |
| LOW-SPEED LATERAL-VELOCITY LANE-DEVIATION TIME | [ALARM AND VEHICLE-CONTROL INVOLVEMENT DEGREE]<br>(LANE RECOGNITION UNIT)<br>A LATERAL-POSITION DETECTION PROCESS 50%<br>B YAW-ANGLE DETECTION PROCESS 25%<br>C CURVATURE DETECTION PROCESS 25%<br>(VHICLE DETECTION UNIT)<br>D LEFT-SIDE DIRECTION PROCESS 50%<br>E RIGHT-SIDE DIRECTION PROCESS 0% | [PROCESS LOAD]<br>(LANE RECOGNITION UNIT) 50 ms<br>A LATERAL-POSITION DETECTION PROCESS 46%<br>B YAW-ANGLE DETECTION PROCESS 23%<br>C CURVATURE DETECTION PROCESS 16%<br>Z OTHERS 20%<br>(VEHICLE DETECTION UNIT) 50 ms<br>D LEFT-SIDE DIRECTION PROCESS 45%<br>E RIGHT-SIDE DIRECTION PROCESS 0%<br>Y VEHICLE OTHERS 10% | [PROCESS LOAD]<br>(LANE RECOGNITION UNIT) 50 ms<br>A LATERAL-POSITION DETECTION PROCESS 60%<br>B YAW-ANGLE DETECTION PROCESS 30%<br>C CURVATURE DETECTION PROCESS 21%<br>Z OTHERS 20%<br>(VEHICLE DETECTION UNIT) 50 ms<br>D LEFT-SIDE DIRECTION PROCESS 59%<br>E RIGHT-SIDE DIRECTION PROCESS 0%<br>Y VEHICLE OTHERS 10% |
| HIGH-SPEED LATERAL-VELOCITY LANE-DEVIATION TIME | [ALARM AND VEHICLE-CONTROL INVOLVEMENT DEGREE]<br>(LANE RECOGNITION UNIT)<br>A LATERAL-POSITION DETECTION PROCESS 30%<br>B YAW-ANGLE DETECTION PROCESS 50%<br>C CURVATURE DETECTION PROCESS 20%<br>(VHICLE DETECTION APP)<br>D LEFT-SIDE DIRECTION PROCESS 50%<br>E RIGHT-SIDE DIRECTION PROCESS 0% | [PROCESS LOAD]<br>(LANE RECOGNITION UNIT) 50 ms<br>A LATERAL-POSITION DETECTION PROCESS 28%<br>B YAW-ANGLE DETECTION PROCESS 46%<br>C CURVATURE DETECTION PROCESS 13%<br>Z OTHERS 20%<br>(VEHICLE DETECTION UNIT) 50 ms<br>D LEFT-SIDE DIRECTION PROCESS 45%<br>E RIGHT-SIDE DIRECTION PROCESS 0%<br>Y VEHICLE OTHERS 10% | [PROCESS LOAD]<br>(LANE RECOGNITION UNIT) 50 ms<br>A LATERAL-POSITION DETECTION PROCESS 36%<br>B YAW-ANGLE DETECTION PROCESS 59%<br>C CURVATURE DETECTION PROCESS 17%<br>Z OTHERS 20%<br>(VEHICLE DETECTION UNIT) 50 ms<br>D LEFT-SIDE DIRECTION PROCESS 58%<br>E RIGHT-SIDE DIRECTION PROCESS 0%<br>Y VEHICLE OTHERS 10% |
| IN-CURVE LANE-CENTER TRAVEL-CONTROL TIME | [ALARM AND VEHICLE-CONTROL INVOLVEMENT DEGREE]<br>(LANE RECOGNITION UNIT)<br>A LATERAL-POSITION DETECTION PROCESS 20%<br>B YAW-ANGLE DETECTION PROCESS 40%<br>C CURVATURE DETECTION PROCESS 40%<br>(VHICLE DETECTION APP)<br>D LEFT-SIDE DIRECTION PROCESS 50%<br>E RIGHT-SIDE DIRECTION PROCESS 50% | [PROCESS LOAD]<br>(LANE RECOGNITION UNIT) 50 ms<br>A LATERAL-POSITION DETECTION PROCESS 19%<br>B YAW-ANGLE DETECTION PROCESS 37%<br>C CURVATURE DETECTION PROCESS 26%<br>Z OTHERS 20%<br>(VEHICLE DETECTION UNIT) 50 ms<br>D LEFT-SIDE DIRECTION PROCESS 45%<br>E RIGHT-SIDE DIRECTION PROCESS 45%<br>Y VEHICLE OTHERS 10% | [PROCESS LOAD]<br>(LANE RECOGNITION UNIT) 50 ms<br>A LATERAL-POSITION DETECTION PROCESS 19%<br>B YAW-ANGLE DETECTION PROCESS 35%<br>C CURVATURE DETECTION PROCESS 26%<br>Z OTHERS 20%<br>(VEHICLE DETECTION UNIT) 50 ms<br>D LEFT-SIDE DIRECTION PROCESS 45%<br>E RIGHT-SIDE DIRECTION PROCESS 45%<br>Y VEHICLE OTHERS 10% |

# FIG.12

PRESCRIBED
PROCESS CYCLE T

| FRAME | LANE RECOGNITION | | | | SIDE-DIRECTION VEHICLE DETECTION | | |
|---|---|---|---|---|---|---|---|
| NORMAL TIME | A | B | C | Z | D | E | Y |

| LOW-SPEED LATERAL-VELOCITY LANE-DEVIATION TIME | LANE RECOGNITION | | | SIDE-DIRECTION VEHICLE DETECTION | | |
|---|---|---|---|---|---|---|
| | A | B | C | Z | D | Y |

| HIGH-SPEED LATERAL-VELOCITY LANE-DEVIATION TIME | LANE RECOGNITION | | | SIDE-DIRECTION VEHICLE DETECTION | | |
|---|---|---|---|---|---|---|
| | A | B | C | Z | D | Y |

| IN-CURVE LANE-CENTER TRAVEL-CONTROL TIME | LANE RECOGNITION | | | | SIDE-DIRECTION VEHICLE DETECTION | | |
|---|---|---|---|---|---|---|---|
| | A | B | C | Z | D | E | Y |

# FIG.13

## (a)

LEFTWARD-LANE DEVIATION

PRESCRIBED
PROCESS CYCLE T

| A B C | D E | A | D | A | D | A | D | A B C | D |

## (b)

LATERAL
POSITION

11

YAW
ANGLE

1

# FIG.14

### (a)

SUDDEN LEFTWARD-LANE DEVIATION

PRESCRIBED
PROCESS CYCLE T

| A B C | D E | A B | E | A B | E | A B | E | A B C | D E |

### (b)

LATERAL
POSITION

11

YAW
ANGLE

1

<div style="text-align:center">**INTERNATIONAL SEARCH REPORT**</div>

| International application No. |
|---|
| PCT/JP2012/075886 |

**A. CLASSIFICATION OF SUBJECT MATTER**
*G08G1/16*(2006.01)i, *B60R21/00*(2006.01)i

According to International Patent Classification (IPC) or to both national classification and IPC

**B. FIELDS SEARCHED**

Minimum documentation searched (classification system followed by classification symbols)
G08G1/16, B60R21/00

Documentation searched other than minimum documentation to the extent that such documents are included in the fields searched
Jitsuyo Shinan Koho       1922-1996   Jitsuyo Shinan Toroku Koho    1996-2012
Kokai Jitsuyo Shinan Koho  1971-2012   Toroku Jitsuyo Shinan Koho    1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2010/038851 A1 (Hitachi Automotive Systems, Ltd.),<br>08 April 2010 (08.04.2010),<br>paragraphs [0020] to [0024]<br>& EP 2346014 A1        & CN 102171743 A | 1,5<br>2-4 |
| X<br>A | JP 2006-185045 A (Mitsubishi Motors Corp.),<br>13 July 2006 (13.07.2006),<br>paragraphs [0027] to [0029]<br>(Family: none) | 1,5<br>2-4 |
| X<br>A | JP 2009-116539 A (Fujitsu Ten Ltd.),<br>28 May 2009 (28.05.2009),<br>paragraph [0034]<br>(Family: none) | 1,5<br>2-4 |

☒ Further documents are listed in the continuation of Box C.          ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 December, 2012 (10.12.12) | 25 December, 2012 (25.12.12) |

| Name and mailing address of the ISA/<br>    Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2012/075886

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2011-100338 A  (Hitachi Automotive Systems, Ltd.),<br>19 May 2011 (19.05.2011),<br>entire text; all drawings<br>& EP 2498185 A1          & WO 2011/055581 A1 | 2-4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008062512 A